# EUROPÄISCHE PATENTSCHRIFT

(11) **EP 0 678 442 B1**
(45) Veröffentlichungstag und Bekanntmachung des Hinweises auf die Patenterteilung: **04.03.1998**
(21) Anmeldenummer: 95105353.7
(22) Anmeldetag: 08.04.1995
(51) Int. Cl.: B62D 31/02, B62D 47/02, B62D 21/11, B60K 5/10, B60G 15/07

(54) **Einzelrad-Federbeinaufhängung für Fahrzeuge**
Single wheel suspension for vehicles
Suspension indépendante pour véhicules

(30) Priorität: 18.04.1994 DE 4413412
(43) Veröffentlichungstag der Anmeldung: 25.10.1995
(73) Patentinhaber: DAIMLER-BENZ AKTIENGESELLSCHAFT, 70567 Stuttgart (DE)
(72) Erfinder: Mauz, Uwe, D-73730 Esslingen (DE); Verhouc, Helmut, D-73099 Adelberg (DE); Jaun, Heinz, D-71686 Remseck (DE); Hametner, Gerhard, D-72669 Unterensingen (DE)

(56) Entgegenhaltungen:
- EP-A- 0 244 549
- EP-A- 0 287 278
- EP-A- 0 417 820
- DE-C- 913 263
- GB-A- 706 398
- US-A- 2 047 336
- PATENT ABSTRACTS OF JAPAN vol. 010 no. 021 (M-449) ,28.Januar 1986 & JP-A-60 179313 (MAZDA KK) 13.September 1985,
- PATENT ABSTRACTS OF JAPAN vol. 011 no. 175 (M-596) ,5.Juni 1987 & JP-A-62 008804 (HONDA MOTOR CO LTD) 16.Januar 1987,

## Beschreibung

Die Erfindung betrifft eine Einzelrad-Federbeinaufhängung für Fahrzeuge gemäß dem Oberbegriff des Anspruches 1.

Eine solche Einzelrad-Federbeinaufhängung ist aus der JP-A-60 179 313 (Patent Abstracts of Japan, vol. 010, no. 021 (M-449), 28. Januar 1986) bekannt. Ausgangspunkt ist bei dieser bekannten Lösung, daß durch den seitlichen Versatz der Federbeinachse zur Radmittenlängsebene, in der die Radaufstandskraft angreift, auf das Federbein ein Biegemoment ausgeübt wird, mit der Folge, daß die dadurch gegebenen Querkräfte das Ansprechverhalten des Federbeines durch Verklemmen des Federbeinkolbens im Zylinder verschlechtern, und auch den Verschließ des Federbeines erhöhen.

Um dem entgegenzuwirken wird ein Gegenmoment aufgebracht, und dieses Gegenmoment wird im Bereich der oberen Anlenkung des Federbeines über einen sich von der Federbeinachse gegen das Rad erstreckenden Schwenkhebel eingeleitet, der über einen Hydraulikzylinder beaufschlagt ist, wobei der Arbeitsdruck des Hydraulikzylinders proportional zum Arbeitsdruck des Federbeines ist und von einem in Verbindung mit dem Federbein stehenden Blasenspeicher abgezweigt wird.

Mit dieser Lösung lassen sich auf das Federbein wirkende, aus der Radaufstandskraft resultierende Biegekräfte im Prinzip kompensieren, der dafür zu betreibende Aufwand ist aber erheblich, und zwar sowohl räumlich wie auch kostenmäßig, wie sich schon aus der Verwendung eines hydraulischen Arbeitszylinders und der notwendigen Einbindung desselben in den hydraulischen Arbeitskreis des jeweiligen Federbeines ergibt.

Weiter ist aus der JP-A-62 008 804 (Patent Abstracts of Japan, vol. 011, no. 175 (M-596), 5. Juni 1987) eine Einzelrad-Federbeinaufhängung für Motorräder bekannt, bei der die obere Abstützung des Federbeins über einen schwenkbar angelenkten Hebelarm erfolgt. Ziel dieser Anlenkung des Federbeins ist es, eine progressive Dämpfungscharakteristik zu erreichen. Konstruktiv ist hierzu die Aufhängung so gestaltet, daß bei von unten schräg nach vorne oben verlaufendem Federbein und einer Anlenkung des Federbeins am rückwärtigen Ende der vom Federbein in Fahrtrichtung nach vorne verlaufenden Radschwinge die Abstützung des Federbeins am oberen Ende über einen vom Federbein nach hinten ragenden Ausleger erfolgt, der an seinem vom Federbein abgelegenen Ende schwenkbar angelenkt ist. Federt das Rad ein, so ergibt sich entsprechend der zunehmenden Schrägstellung des Federbeins eine zur Radschwinge entgegengerichtete Schwenkrichtung des Auslegers, mit der Folge einer zusätzlichen Federverkürzung durch die Schwenkbewegung des Auslegers - im Vergleich zu einer in der Achse des Federbeins liegenden schwenkbaren oberen Anlenkung desselben -, und damit die angestrebte progressive Dämpfungscharakteristik.

Der Erfindung liegt die Aufgabe zugrunde, für eine Einzelrad-Federbeinaufhängung der eingangs genannten Art eine Lösung aufzuzeigen, bei der mit konstruktiv einfachen Mitteln, und damit kostengünstig die Biegekräfte auf das Federbein zumindest wesentlich reduziert werden können.

Erreicht wird dies durch die Merkmale des Anspruches 1 mit einer rein passiven Lösung, nämlich einer exzentrischen Abstützung des jeweiligen Federbeines, was weit weniger Aufwand verursacht als eine Lösung mit aktiver Verstellung über Stellzylinder, und dies insbesondere bei schweren Fahrzeugen, wobei sich mit den einfachen, erfindungsgemäßen Mitteln eine so weitgehende Reduktion der Biegemomente auf das Federbein erreichen läßt, daß dessen Ansprechverhalten deutlich verbessert und dessen Verschleiß entsprechend verringert wird.

Um zusätzlich, insbesondere auch bei schweren Fahrzeugen den seitlichen Versatz der Räder zu den Federbeinen möglichst klein halten zu können, erweist es sich als zweckmäßig, wenn für jedes Rad zwei in Fahrtrichtung parallel hintereinander angeordnete Federbeine vorgesehen werden, die zweckmäßigerweise gemeinsam auf ein karrosserieseitiges Lager abgestützt werden, das mit Versatz in Richtung auf die Fahrzeugmitte zwischen den Federbeinen angeordnet ist. Eine solche Lösung erlaubt eine in Fahrzeugquerrichtung insgesamt sehr schmal bauende Federbeinanordnung und Federbeinabstützung.

Die Verbindung zu dem karrosserieseitigen Lager läßt sich dabei in einfacher Weise über an den Außenrohren der Federbeine angebrachte Winkelkonsolen erreichen, die ihrerseits für die einem Lager zugeordneten Federbeine über eine Brücke mit dem Lager verbunden werden.

Mit Vorteil läßt sich eine solche Einzelrad-Federbeinaufhängung insbesondere bei Omnibussen einsetzen, bei denen das Antriebsaggregat über der Achse angeordnet ist, derart, daß karrosserieseitige Querstreben des Aufbaugerippes einerseits als Träger für das Achsaggregat und andererseits als Träger für die Lager der Federbeinaufhängung dienen.

Die Erfindung wird im folgenden mit weiteren Einzelheiten anhand der Zeichnungen näher erläutert. Es zeigen:
- Figur 1: in perspektivischer Darstellung ein Heckteil eines Omnibusses,
- Figur 2: vergrößert und schematisiert dargestellt den unteren Bereich dieses Heckteiles mit der Einzelradaufhängung,
- Figur 3: eine Seitenansicht der Federbeinanordnung der Einzelradaufhängung gemäß Figur 2, und
- Figur 4: eine Ansicht der Federbeinanordnung gemäß Figur 3 in Fahrzeuglängsrichtung.

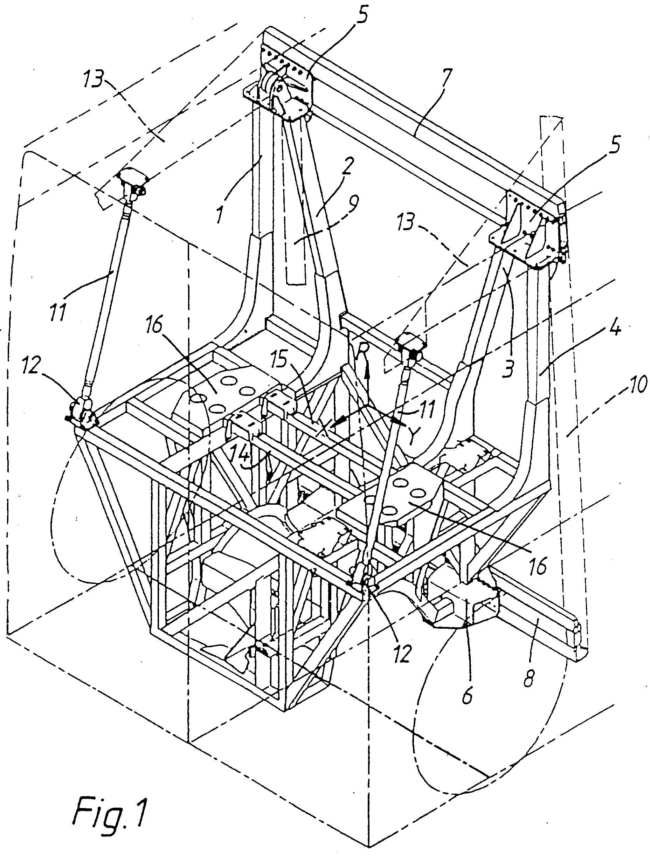

Wie insbesondere aus Figur 1 ersichtlich ist das Heckteil des Omnibusses, dessen hintere Umrisse nur angedeutet sind, als Aggregateträger (Fachwerkrahmenaufbau) ausgebildet, der bei stuhlförmiger Grundform einen an die Fahrgastzelle anschließenden Lehnenteil mit seitlich liegenden und in Hochrichtung verlaufenden Holmen 1 bis 4 aufweist. Von den Holmen 1 bis 4 sind jeder Fahrzeugseite zwei Holme 1, 2 bzw. 3, 4 zugeordnet. Die oberen und die unteren Enden der Holme 1, 2 bzw. 3, 4 sind nach oben und nach unten jeweils auf eine Winkelkonsole 5 bzw. 6 zusammengeführt. Die Winkelkonsolen 5, 6 sind ihrerseits an der Struktur der Fahrgastzelle zugehörigen Trägern 7 bis 10 befestigt.

In Ergänzung dieser Befestigung an der Fahrgastzelle ist der Aggregateträger im Bereich des freien Endes des vom Lehnenteil nach hinten auskragenden Sitzteiles über Pendelstützen 11 an rückwärtigen Verlängerungen 13 des oberen Bereiches der Fahrgastzelle abgestützt, wobei die Anbindung der Pendelstützen über Gelenke 12 erfolgt.

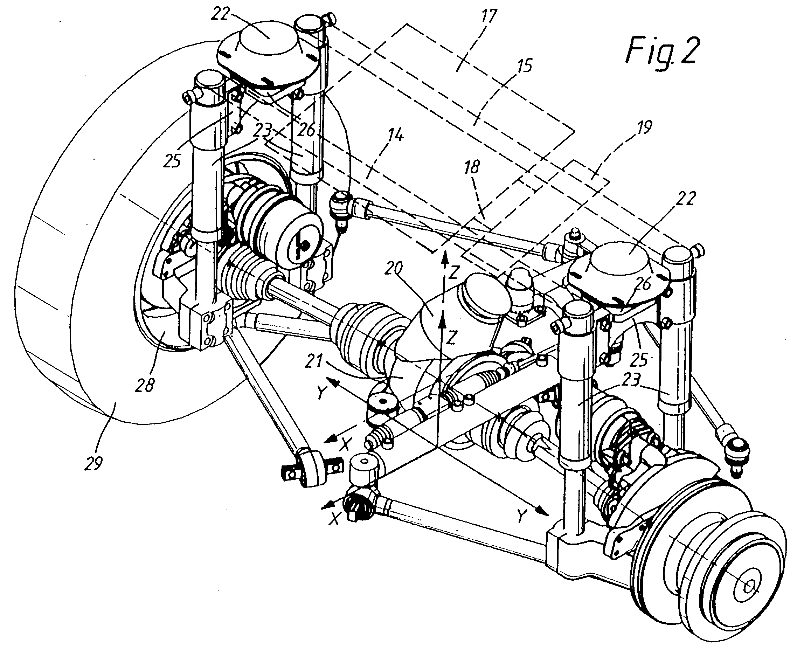

Der Sitzteil des Aggregateträgers weist im Bereich direkt über der Hinterachse zwei mit geringem Abstand parallel zueinander verlaufende Querstreben 14 und 15 auf, an denen jeweils die Federbeinkonsolen 16 der unabhängigen Aufhängungen der Hinterräder 28 befestigt sind. Auf den Querstreben 14 und 15 ist als Antriebsaggregat z.B. ein Verbrennungsmotor 17 mit quer zur Fahrtrichtung liegender Längsachse nebst Zusatzaggregaten, wie z.B. Kupplung 18 und Getriebe 19 angeordnet. Aus Übersichtichkeitsgründen sind diese Teile in Figur 1 weggelassen und in Figur 2 nur symbolisch gestrichelt dargestellt. Von dem Getriebe 19 aus führt eine nicht dargestellte Gelenkwellenverbindung zu einem Transfergetriebe 20, das auf ein Hinterachsdifferenzial 21 aufgesetzt ist.

An den mit den Querstreben 14 und 15 verbundenen Federbeinkonsolen 16, die in Figur 2 nicht dargestellt sind, stützen sich von unten her die rahmenseitigen Lager 22 der Federbeine 23 ab. Auf jeder Fahrzeugseite, also für jede der Einzelradaufhängungen sind zwei Federbeine 23 parallel hintereinander angeordnet, wobei jeweils eines der Federbeine vor und das andere hinter der Achsmitte liegt.

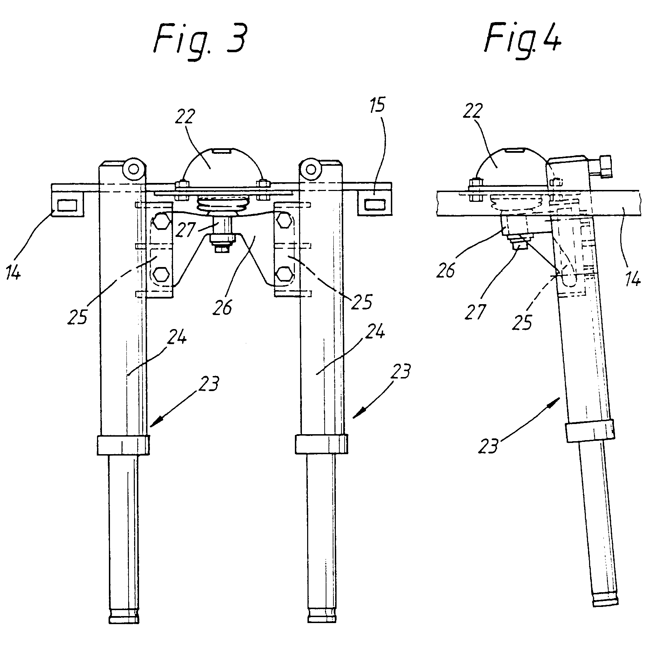

Insbesondere aus den Figuren 3 und 4 ist die aufbauseitige, also obere Abstützung der Federbeine ersichtlich. Diese zeigen, daß an den Außenrohren 24 der Federbeine 23 jeweils Winkelkonsolen 25 angebracht sind, welche über eine Brücke 26 starr verbunden sind, die ihrerseits an dem Zapfen 27 des jeweiligen, als Gleitlager ausgebildeten rahmenseitigen Lagers 22 befestigt ist. Der Zapfen 27 liegt unterhalb der Gleitlagerschale des Lagers 22, das seinerseits, wie hier nicht weiter dargestellt, mit der jeweiligen Federkonsole 16 starr verbunden wird.

Durch die Art der Anbindung des Federbeines 23 am Lager 22 ergibt sich ein seitlicher Versatz zwischen der Achse des Federbeins 23 und der Achse des Lagers 22, mit der Folge, daß über die Federbeine 23 auf das Lager 22 eingeleitete Hochkräfte bezogen auf die Federbeinachse ein Moment zur Folge haben, dem über das Federbein abzufangende, nach der Außenseite des Fahrzeuges gerichtete Querkräfte entsprechen.

Die Räder 28 mit ihren Reifen 29 sind gegenüber der durch die jeweiligen Federbeine 23 aufgespannten Fahrzeuglängsebene ebenfalls querversetzt angeordnet, aber entgegengesetzt zum Lager 23. Auf die Federbeine 23 als Teil der insoweit herkömmlich aufgebauten Radaufhängung ergeben sich damit durch über die Räder 28 eingeleitete Hochkräfte Momente, die Querkräfte zur Folge haben, welche jenen durch den Seitenversatz der Lager 22 bedingten Querkräften entgegengesetzt sind, so daß sich die wechselseitigen Querkräfte zumindest weitgehend aufheben. Die damit verbundene Reduzierung der auf die Federbeine wirksamen Querkräfte hat zur Folge, daß diese in ihrem Ansprechverhalten durch aus den Querkräften resultierende Kippmomente nicht verspannt und dadurch verhärtet werden. Mit der Verminderung solcher Kippmomente wird auch der Verschleiß der Federbeine verringert.

## Patentansprüche

1. Einzelrad-Federbeinaufhängung für Fahrzeuge mit unteren Radführungsgliedern, Federbeinen und oberer Abstützung der Federbeine gegen karosserieseitige Lager, bei der durch den seitlichen Versatz der Räder zu den Radaufhängungen über die Radaufstandskräfte auf die Federbeine jeweils ein Biegemoment wirkt, dem durch Aufbringen eines Gegenmomentes im Bereich des jeweiligen karosserieseitigen Lagers des Federbeines ein Gegenmoment derart überlagerbar ist, daß die durch die Momente bedingten Querkräfte einander entgegenwirken,
**dadurch gekennzeichnet,**
daß das Gegenmoment dadurch aufgebracht wird, daß das jeweilige karosserieseitige Lager (22) nach der vom Rad (29) abgewandten Seite zur Achse des jeweiligen Federbeines (23) versetzt ist.

2. Einzelrad-Federbeinaufhängung nach Anspruch 1,
**dadurch gekennzeichnet,**
daß für jedes Rad (28) zwei in Fahrtrichtung parallel hintereinander angeordnete Federbeine (23) vorgesehen sind.

3. Einzelrad-Federbeinaufhängung nach Anspruch 2,
**dadurch gekennzeichnet,**
daß die einem Rad (28) zugeordneten Federbeine (23) gemeinsam auf ein karosserieseitiges Lager (22) abgestützt sind, das mit Versatz in Richtung auf die Fahrzeugmittte zwischen den Federbeinen (23) angeordnet ist.

4. Einzelrad-Federbeinaufhängung nach einem der vorhergehenden Ansprüche,
**dadurch gekennzeichnet,**
daß die Federbeine (23) zur Verbindung mit dem Lager (22) an ihren Außenrohren (24) mit Winkelkonsolen (25) versehen sind.

5. Einzelrad-Federbeinaufhängung nach Anspruch 4,
**dadurch gekennzeichnet,**
daß die Winkelkonsolen (25) der einem Lager (22) zugeordneten Federbeine (23) über eine Brücke (26) mit dem jeweiligen Lager (22) verbunden sind.

6. Einzelrad-Federbeinaufhängung nach einem der vorhergehenden Ansprüche,
**dadurch gekennzeichnet,**
daß das Lager (22) gegen karosserieseitige Querstreben (14, 15) eines Aufbaugerippes eines insbesondere in Niederflurbauweise ausgebildeten Omnibusses abgestützt ist, auf denen das Antriebsaggregat des Omnibus ruht.

## Claims

1. Single-wheel strut suspension for motor vehicles having lower wheel guide members, struts and upper support for the struts against bearings on the body-side, whereby a bending moment is imparted to the struts due to the lateral offset of the wheels relative to the wheel suspensions via the reacting forces of the wheel, on which a counter-moment can be super-imposed by the application of a counter-moment in the region of the respective bearing of the strut on the body-side in such a way that the moments generated by the transverse forces act one against the other,
**characterised in that**
the counter-moment is applied due to the fact that the respective body-side bearing (22) is offset from the axis of the respective strut (23) to the side facing away from the wheel (29).

2. Single-wheel strut suspension as claimed in claim 1,
**characterised in that**
two struts (23) are provided for each wheel (28) disposed parallel one after the other in the driving direction.

3. Single-wheel strut suspension as claimed in claim 2,
**characterised in that**
the struts (23) assigned to one wheel (28) are jointly supported on a bearing (22) on the body-side disposed between the struts (23) offset with respect to the direction running to the centre of the vehicle.

4. Single-wheel strut suspension as claimed in one of the preceding claims,
**characterised in that**
the struts (23) are provided with angle brackets on the outer tubes (24) thereof to provide a joint with the bearing (22).

5. Single-wheel strut suspension as claimed in claim 4,
**characterised in that**
the angle brackets (25) of the struts (23) assigned to one bearing (22) are connected to the respective bearing (22) by means of a bridge (26).

6. Single-wheel suspension as claimed in one of the preceding claims,
**characterised in that**
the bearing (22) is supported against body-side cross-struts (14, 15) of a bus framework of a drop-frame design in particular, on which the drive unit of the bus rests.

## Revendications

1. Suspension indépendante à jambes de force élastiques pour véhicules, comprenant des organes inférieurs de guidage de roue, des jambes de force élastiques et un appui supérieur des jambes de force élastiques contre un palier côté carrosserie, dans laquelle le décalage latéral des roues par rapport aux suspensions des roues provoque sur les jambes de force élastiques, par suite des forces de contact des roues avec le sol, dans chaque cas un moment de flexion auquel peut être superposé un moment antagoniste par l'exercice d'un moment antagoniste dans la zone du palier respectif, côté carrosserie, de la jambe de force élastique de manière que les forces de cisaillement dues aux moments s'opposent les unes aux autres, caractérisée en ce que le moment antagoniste est exercé par le fait que chaque palier (22) côté carrosserie est décalé vers le côté opposé à celui de la roue (29) par rapport à l'axe de la jambe de force élastique respective (23).

2. Suspension indépendante à jambes de force élastiques selon la revendication 1, caractérisée en ce que deux jambes de force élastiques parallèles (23), disposées l'une derrière l'autre dans la direction de la marche, sont prévues pour chaque roue (28).

3. Suspension indépendante à jambes de force élastiques selon la revendication 2, caractérisée en ce que les jambes de force élastiques (23) associées à une roue (28) prennent appui ensemble sur un palier (22) côté carrosserie qui est disposé entre les jambes de force élastiques (23) avec décalage vers le milieu du véhicule.

4. Suspension indépendante à jambes de force élastiques selon l'une des revendications précédentes, caractérisée en ce que les jambes de force élastiques (23) sont équipées, sur leur tube extérieur (24), de consoles à équerre (25) pour l'assemblage avec le palier (22).

5. Suspension indépendante à jambes de force élastiques selon la revendication 4, caractérisée en ce que les consoles à équerre (25) des jambes de force élastiques (23) associées à un palier (22) sont reliées au moyen d'une entretoise (26) au palier respectif (22).

6. Suspension indépendante à jambes de force élastiques selon l'une des revendications précédentes, caractérisée en ce que le palier (22) prend appui contre des traverses (14, 15), côté carrosserie, d'une ossature de carrosserie d'un autobus réalisé en mode de construction à plancher surbaissé, traverses sur lesquelles le groupe motopropulseur de l'autobus repose.
